Europäisches Patentamt

European Patent Office

Office européen des brevets

(11) Publication number: **0 327 101**
**A2**

# (12) EUROPEAN PATENT APPLICATION

(21) Application number: 89101889.7

(51) Int. Cl.⁴ **H04J 3/16**

(22) Date of filing: 03.02.89

(30) Priority: 05.02.88 JP 23729/88

(43) Date of publication of application:
09.08.89 Bulletin 89/32

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Ooi, Tomoyuki c/o NEC Corporation**
**33-1, Shiba 5-chome**
**Minato-ku Tokyo(JP)**
Inventor: **Isoe, Yasuhito c/o NEC Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) Satellite communication system with variable coding rate.

(57) A satellite communication system with a variable
coding rate maintains all the channels connectable at
all times without resorting to an extra frequency
band associated with one carrier wave on a satellite
transponder and otherwise required to accommodate
the simultaneous occurrence of multiple call re-
quests which is rare. The system selectively
changes the coding rate of data to implement the
transmission of massive data without the need for an
increase in the frequency band on a satellite tran-
sponder, contributing a great deal to the efficient use
of frequency bands available with a satellite tran-
sponder

Fig. 5A

Fig. 5B

Fig. 6

EP 0 327 101 A2

# SATELLITE COMMUNICATION SYSTEM WITH VARIABLE CODING RATE

## BACKGROUND OF THE INVENTION

The present invention relates to a satellite communicating system using a variable coding rate and, more particularly, to a satellite communication system with a variable coding rate which promotes effective use of a communication satellite even when multiple call requests occur at the same time.

In the data communications art, multiple channels of data are transmitted on a time division multiplex (TDM) basis by using a transponder of a communication satellite and a single carrier wave. In a prior art demand-assign satellite communications system, N channels of coded and modulated transmit data which occur constantly or substantially constantly and I channels of coded and modulated transmit data which rarely occur may be sent simultaneously from transmit terminal equipment to receive terminal equipment. The receive terminal equipment demodulates and decodes the individual transmit data to produce N channels of receive data and I channels of receive data. Assume that in such a communication system N channels of transmit data with a coding rate of 1/2 and I channels of transmit data with a coding rate of 1/2 occur at the same time and occupy adjoining frequency bands on a satellite transponder. Then, the total frequency band occupied on the transponder is substantially twice greater than the frequency band which would be occupied by the N channels of transmit data only. More specifically, the same frequency band as the frequency band assigned to the constantly occurring N channels of data has to be secured on a satellite transponder for the rarely occurring I channels of data, obstructing efficient use of the transponder.

Generally, in a demand-assign communication system which transmits a plurality of channels of data by time division multiplexing in response to call requests, calls cannot be connected when the total amount of data is greater than a predetermined communication capacity available with a single carrier wave, i.e., when multiple call requests occur at the same time. With this type of communication system, it has been customary to increase the number of carrier waves and therefore the frequency band to be used on a satellite transponder when the traffic is conjected as mentioned above. In the aspect of frequency band assignment, therefore, a satellite transponder has to secure an additional frequency band associated with one carrier wave so as to cope with the occurrence of simultaneous call requests which is rare, resulting in the waste of frequency bands available with a transponder.

## SUMMARY OF THE INVENTION

It is therefore an object of the present invention to provide a satellite communication system with a variable coding rate which maintains all the channels connectable at all times without resorting to an extra frequency band associated with one carrier wave on a satellite transponder otherwise permanently needed to accommodate channels which rarely occur.

It is another object of the present invention to provide a generally improved communication system with a variable coding rate.

In a satellite communication system with a variable coding rate having transmit terminal equipment a receive terminal equipment, in accordance with the present invention, the transmit terminal equipment comprises a data multiplexing circuit for multiplexing transmit data applied over a plurality of channels, a data amount detecting circuit for determining whether or not an amount of the transmit data is greater than a predetermined amount, a variable rate coding circuit having a variable coding rate for coding multiplexed data outputted by the multiplexing circuit, a data modulating circuit for modulating coded data outputted by the variable rate coding circuit to produce modulated data as transmit data, and a coding rate control circuit for, based on a result of detection outputted by the data amount detecting circuit, changing a coding rate of the variable rate coding circuit and transmitting information associated with a change of coding rate by setting the information in the coded data. The receive terminal equipment comprises a data demodulating circuit for demodulating the transmit data received to produce coded data, a variable rate decoding circuit having a variable decoding rate for decoding the coded data outputted by the data demodulating circuit to produce multiplex data, a data demultiplexing circuit for separating the transmit data from the multiplex data outputted by the variable rate decoding circuit, and a decoding rate control circuit for separating the information associated with a change of coding rate from the coded data to change a decoding rate of the variable rate decoding circuit.

## BRIEF DESCRIPTION OF THE DRAWINGS

The above and other objects, features and advantages of the present invention will become more apparent from the following detailed description taken with the accompanying drawings in which:

Fig. 1 is a schematic block diagram showing an essential part of transmit terminal equipment included in a prior art demand-assign satellite communication system;

Fig. 2 is a schematic block diagram showing an essential part of receive terminal equipment also included in the prior art system;

Figs. 3 and 4 show frequency bands occupied by transmit data on a communication satellite;

Fig. 5 is a schematic block diagram showing an essential part of transmit terminal equipment of a satellite communication system embodying the present invention;

Fig. 6 is a schematic block diagram showing an essential part of receive terminal equipment which cooperates with the equipment of Fig. 5;

Fig. 7 shows a frequency band occupied on a satellite transponder associated with the embodiment of the present invention; and

Fig. 8 shows a satellite frame format applicable to the system of Figs. 5 and 6.

## DESCRIPTION OF THE PREFERRED EMBODIMENT

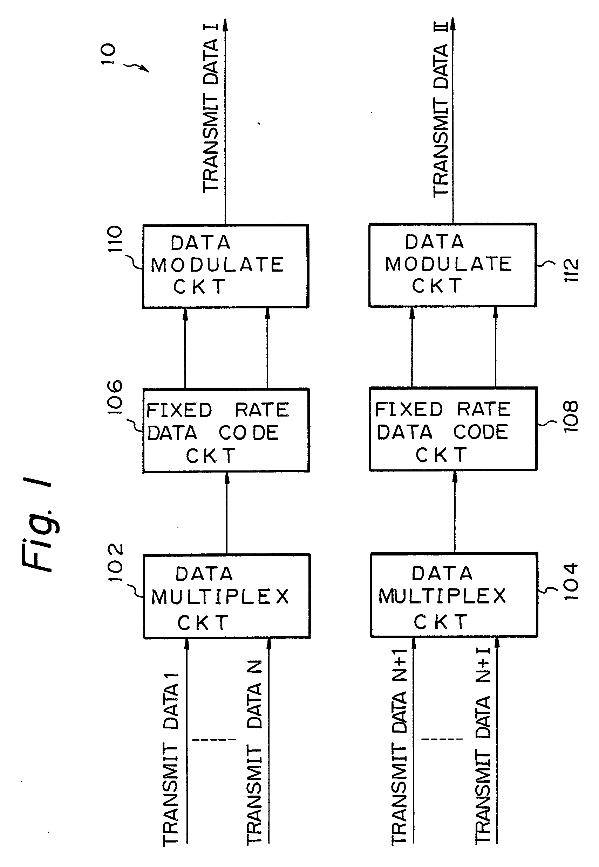

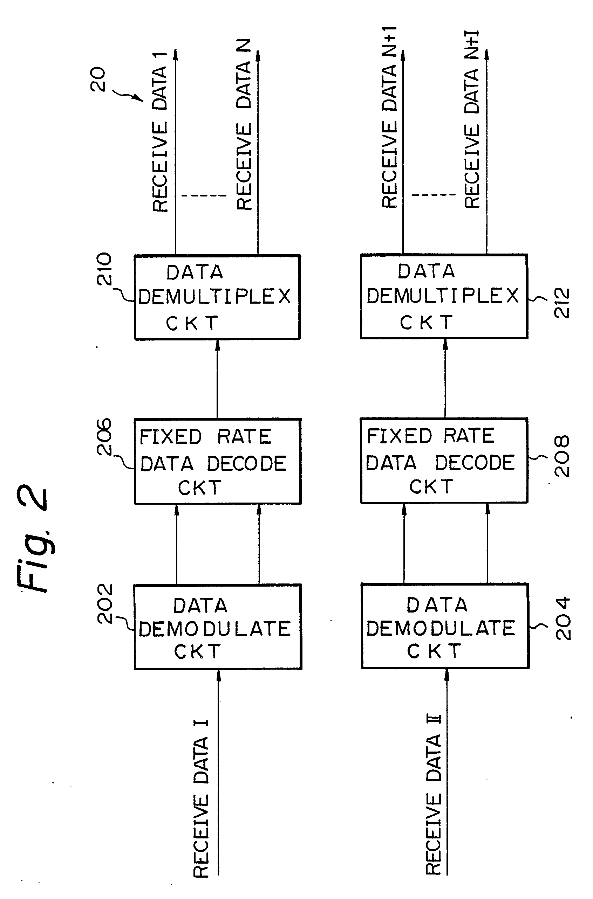

To better understand the present invention, a brief reference will be made to a prior art demand-assign satellite communication system, shown in Figs. 1 and 2. As shown in Fig. 1, transmit terminal equipment 10 forming a part of the prior art system includes data multiplexing circuits 102 and 104 for multiplexing at least data 1 to N and data N + 1 to N + I, respectively. Data coding circuits 106 and 108 are connected respectively to the data multiplexing circuits 102 and 104 to code multiplexed data, and each has a fixed coding rate such as 1/2, 3/4 or 7/8. Data modulating circuits 110 and 112 are connected respectively to the data coding circuits 106 and 108 for modulating coded data. The transmit data 1 to N are N channels of data which are transmitted constantly or substantially constantly, while the transmit data N + 1 to N + I are I channels of data which are transmitted at rare intervals. The data modulating circuits 110 and 112 output transmit data I and II, respectively.

Fig. 2 shows receive terminal equipment 20 which forms the other part of the prior art satellite communication system. In the figure, data demodulating circuits 202 and 204 which demodulate respectively at least the transmit data I and II received from the transmit terminal equipment 10. Decoding circuits 206 and 208 are connected respectively to the data demodulating circuits 202 and 204 to decode demodulated data, and each has a fixed decoding rate. Data demultiplexing circuits 210 and 212 are connected respectively to the decoding circuits 206 and 208 for separating decoded data. The equipment 20 processes the received data I and II individually to produce receive data I to N and receive data N + 1 to N + I.

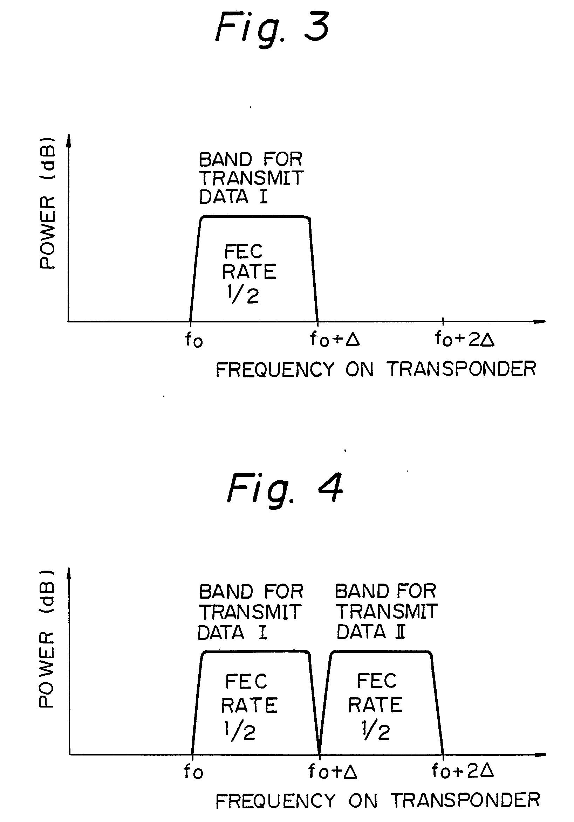

Assume that the transmit data I is coded at a rate of 1/2 and that a frequency band shown in Fig. 3 is assigned to the transmit data I on a satellite transponder. When the transmit data II is produced at the same coding rate, 1/2, as the transmit data I and in a frequency band shown in Fig. 4 on the transponder which adjoins the frequency band assigned to the transmit data I, the assigned frequency band is substantially doubled. That is, the same frequency band as that of the transmit data I has to be assigned to the transmit data II despite that the latter rarely occurs, obstructing effective use of the satellite transponder.

With the prior art system described above, it has been customary to increase the number of carrier waves when the amount of data increases beyond the communication capacity of a single carrier wave, as previously stated. In the aspect of frequency band assignment, therefore, a satellite transponder has to secure a frequency band associated with one carrier wave so as to cope with the occurrence of simultaneous call requests which is rare, resulting in the waste of frequency bands available with a transponder.

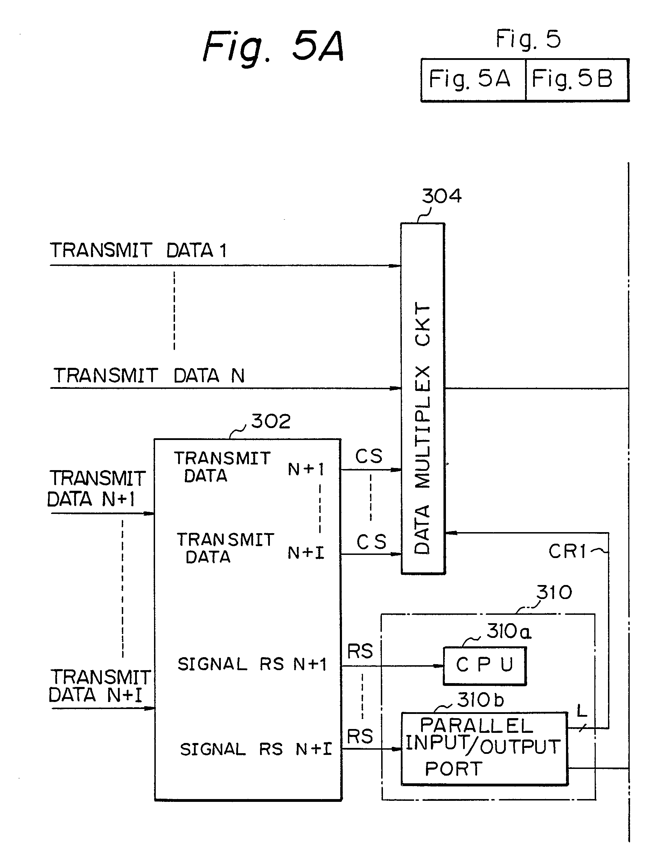

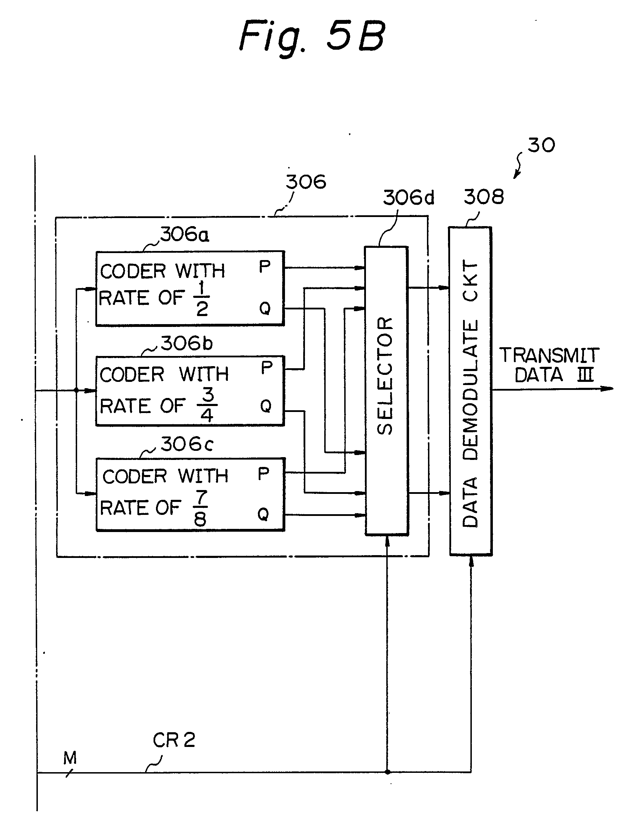

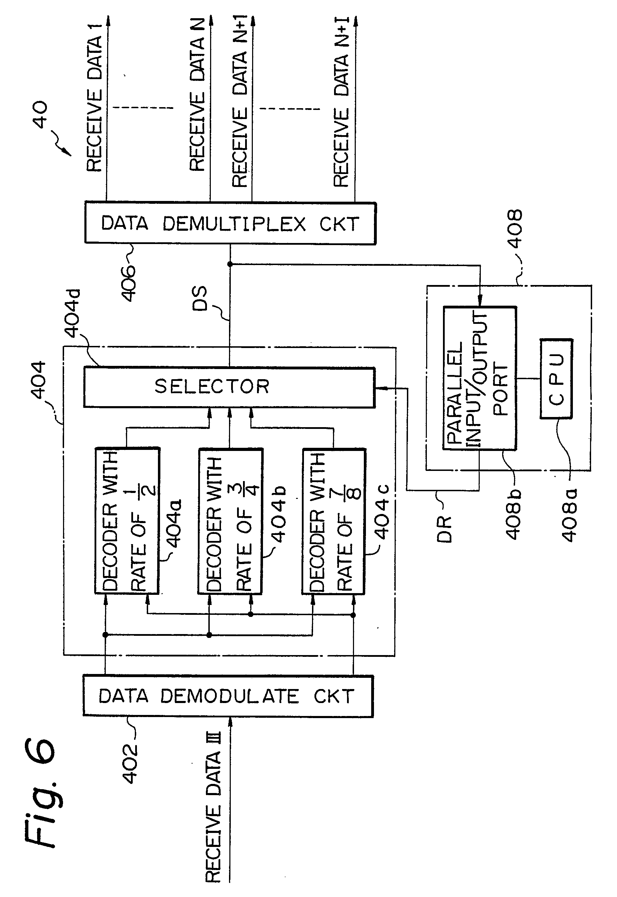

Referring to Figs. 5 and 6, a variable coding rate satellite communication system embodying the present invention is shown which eliminates the drawbacks particular to the prior art as discussed above. In the figures, parts and elements which are the same as or correspond to those of the prior art shown in Figs. 1 and 2 are designated by like symbols.

In Fig. 5, transmit terminal equipment, generally 30, includes a data amount detecting circuit 302 for determining whether or not at least one of transmit data N + 1 to N + I is to be transmitted, in response to a request-to-send signal by way of example. A data multiplexing circuit 304 is controlled by a control signal CS fed from the data amount detecting circuit 302 to decide whether to multiplex N channels of data, i.e., transmit data 1 to N or to multiplex (N + 1) channels of data, i.e. transmit data 1 to N + 1, while multiplexing the data and information associated with a change of coding rate. This information which will be referred to as coding rate information for convenience is set in overhead data. A variable rate coding circuit 306 consists of coders 306a, 306b and 306c having respectively coding rates of 1/2, 3/4 and 7/8, and a selector 306d. This circuit 306 codes either the multiplexed transmit data 1 to N or the multiplexed transmit data 1 to N + 1 by using a different coding rate. In the illustrative embodiment, the circuit 306 uses coding rates of 1/2 and 7/8 for the data I to N and the data 1 to N + 1, respectively. A data modulating circuit 308 modulates the data coded by the variable rate coding circuit 306, adjusts the level of the modulated data, and transmits the resulting data labeled III to receive terminal equipment which will be described. A coding rate control circuit 310 is made up of a central processing unit (CPU) 310a and a parallel input/output port 310b. The control circuit 310 counts those request-to-send signals RS which are coupled thereto from the data amount detecting circuit 302 and have an ON state, by using the CPU 310a. When the number of signals RS having an ON state increases beyond a predetermined value, the control circuit 310 decides to change the coding rate and produces signals CR1 and CR2. The signal CR1 indicates a particular coding rate and a particular frame to follow where the coding rate should be changed, the signal CR2 switches over the coding rate when that particular frame is reached. The signal CR1 is applied to the data multiplexing circuit 304, and the signal CR2 is routed to the selector 306b of the variable rate coding circuit 306 and the data modulating circuit 308. As in the prior art, the transmit data 1 to N are N channels signals which are transmitted constantly or substantially constantly, while the transmit data N + 1 to N + I are I channels of data which are rarely transmitted.

Assuming that the clock rate of the transmit data III is substantially constant, a data rate with an error-correcting coding rate of 7/8 is 7/4 times higher than a data rate with an error-correcting coding rate of 1/2. It follows that, if the data rate is constant, the number of data channels which can be multiplexed on a time division basis when the coding rate is 7/8 is 7/4 times greater than the number of data channels which can be multiplexed when the coding rate is 1/2.

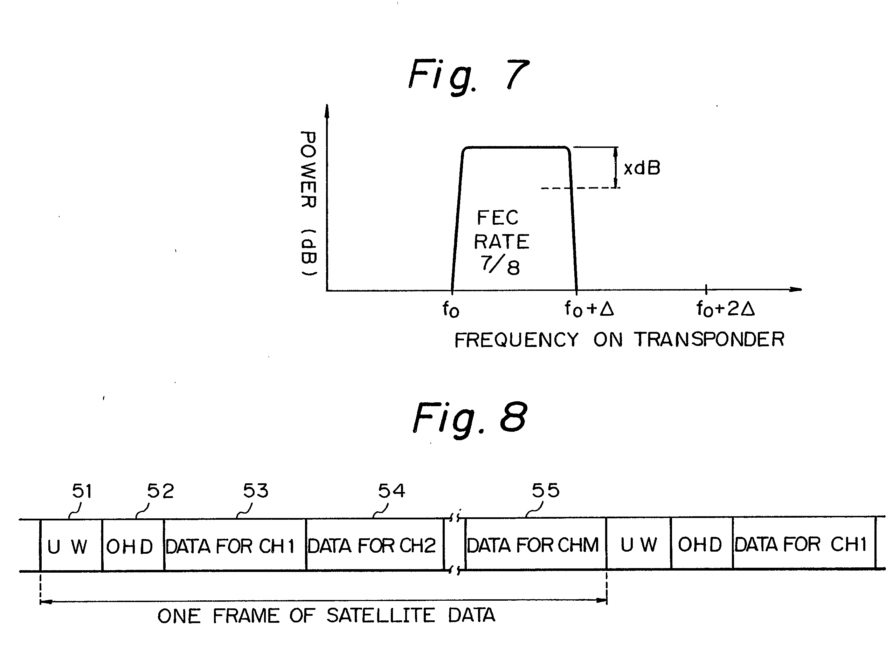

In the illustrative embodiment, a coding rate of 1/2 is selected for the transmission of N channels, i.e. data 1 to data N. Then, on a satellite transponder, the same frequency band as shown in Fig. 3 is assigned to the N channels, as in the prior art. On the other hand, a coding rate of 7/8 is set up for the transmission of (N + 1) channels, i.e. data 1 to data N + 1. In this case, considering the deterioration of coding gain ascribable to the change of coding rate, power on a satellite is increased to guarantee a desired error rate. This allows data to be transmitted in a frequency band associated with a single carrier wave on a transponder, as shown in Fig. 7. More specifically, when data to be rarely transmitted is produced, the coding rate is switched over to eliminate the need for an extra frequency band on a transponder. In Fig. 7, XdB is representative of a portion of power on a transponder which is adapted to compensate for the deterioration of coding gain as mentioned above.

Fig. 8 shows a satellite frame format of data which is applicable to the the embodiment described above with reference to Figs. 5 and 6. As shown, the frame format consists of a unique word 51, overhead data 52, data 53 assigned to the transmit data I, data 54 assigned to the transmit data II, and data 55 assigned to the transmit data M.

Referring to Fig. 6, receive terminal equipment 40 cooperating with the transmit terminal equipment 30 is shown and includes a data demodulating circuit 402 for demodulating at least the receive data III into multiplex data. A variable rate decoding circuit 404 comprises decoders 404a, 404b and 404c having respectively decoding rates of 1/2, 3/4 and 7/8, and a selector 404d. A data demultiplexing circuit 406 separates the multiplex decoded data to produce receive data 1 to N and N + 1 to N + I. A decoding rate control circuit 408 consists of a CPU 408a and a parallel input/output port 408b. The control circuit 408 extracts a coding rate and similar information DR1 out of an output signal DS of the selector 404d of the variable rate decoding circuit 404 and, based on the information DR1, delivers a decoding rate control switchover signal DR to the selector 404d. The overhead data (OHD) multiplexed with data at the transmit terminal equipment 30 contains coding rate information, i.e., a time to change the coding rate and a current and an alternative coding rate. Therefore, the decoding rate control circuit 408 extracts the overhead data out of the signal DS and causes the CPU 408a to read the content of the overhead data accurately, thereby effecting an accurate change of coding rate synchronous with a change of coding rate selected by the transmit terminal equipment 30.

In summary, it will be seen that the present invention provides a variable coding rate satellite communication system which selectively changes the coding rate of data to implement the transmission of massive data without resorting to an increase in the frequency band on a satellite transponder. The system of the invention therefore contributes a great deal to efficient use of frequency bands available with a satellite transponder.

Various modifications will become possible for those skilled in the art after receiving the teachings of the present disclosure without departing from the scope thereof.

## Claims

1. In a satellite communication system with a variable coding rate comprising transmit terminal equipment a receive terminal equipment, said transmit terminal equipment comprising: data multiplexing means for multiplexing transmit data applied over a plurality of channels; data amount detecting means for determining whether or not an amount of the transmit data is greater than a predetermined amount; variable rate coding means having a variable coding rate for coding multiplexed data outputted by said multiplexing means; data modulating means for modulating coded data outputted by said variable rate coding means to produce modulated data as transmit data; and coding rate control means for, based on a result of detection outputted by said data amount detecting means, changing a coding rate of said variable rate coding means and transmitting information associated with a change of coding rate by setting the information in the coded data; said receive terminal equipment comprising: data demodulating means for demodulating the transmit data received to produce coded data; variable rate decoding means having a variable decoding rate for decoding the coded data outputted by said data demodulating means to produce multiplex data; data demultiplexing means for separating the transmit data from the multiplex data outputted by said variable rate decoding means; and decoding rate control means for separating the information associated with a change of coding rate from the coded data to change a decoding rate of said variable rate decoding means.

2. A system as claimed in claim 1, wherein said variable rate coding means of said transmit terminal equipment comprises coders having coding rates of 1/2, 3/4 and 7/8, respectively, and a selector.

3. A system as claimed in claim 2, wherein said coding rate control means comprises a CPU and a parallel input/output port.

4. A system as claimed in any of claims 1 to 3, wherein said variable rate decoding means of said receive terminal equipment comprises decoders having decoding rates of 1/2, 3/4 and 7/8, respectively, and a selector.

5. A system as claimd in claim 4, wherein said decoding rate control means comprises a CPU and a parallel input/output port.

Fig. I

TRANSMIT DATA 1 → ... → TRANSMIT DATA N → **DATA MULTIPLEX CKT** 102 → **FIXED RATE DATA CODE CKT** 106 → **DATA MODULATE CKT** 110 → TRANSMIT DATA I

TRANSMIT DATA N+1 → ... → TRANSMIT DATA N+I → **DATA MULTIPLEX CKT** 104 → **FIXED RATE DATA CODE CKT** 108 → **DATA MODULATE CKT** 112 → TRANSMIT DATA II

10

EP 0 327 101 A2

# Fig. 2

## Fig. 3

POWER (dB)

BAND FOR
TRANSMIT
DATA I

FEC
RATE
1/2

f₀　　　　f₀+Δ　　　f₀+2Δ

FREQUENCY ON TRANSPONDER

## Fig. 4

POWER (dB)

BAND FOR
TRANSMIT
DATA I

BAND FOR
TRANSMIT
DATA II

FEC
RATE
1/2

FEC
RATE
1/2

f₀　　　　f₀+Δ　　　f₀+2Δ

FREQUENCY ON TRANSPONDER

## Fig. 5A

Fig. 5

| Fig. 5A | Fig. 5B |
|---------|---------|

TRANSMIT DATA 1

TRANSMIT DATA N

304

DATA MULTIPLEX CKT

302

TRANSMIT DATA N+1

TRANSMIT DATA N+1

TRANSMIT DATA N+I

TRANSMIT DATA N+I

TRANSMIT DATA N+1 → CS

TRANSMIT DATA N+I → CS

SIGNAL RS N+1 → RS

SIGNAL RS N+I → RS

CR1

310

310a

C P U

310b

PARALLEL INPUT/OUTPUT PORT

L

# Fig. 5B

## Fig. 6

RECEIVE DATA Ⅲ →

402 — DATA DEMODULATE CKT

404
404d

DECODER WITH RATE OF $\frac{1}{2}$
404a

DECODER WITH RATE OF $\frac{3}{4}$
404b

DECODER WITH RATE OF $\frac{7}{8}$
404c

SELECTOR

DS

406 — DATA DEMULTIPLEX CKT

40

RECEIVE DATA 1

RECEIVE DATA N

RECEIVE DATA N+1

RECEIVE DATA N+I

DR

PARALLEL INPUT/OUTPUT PORT

408b

CPU

408a

408

EP 0 327 101 A2

## Fig. 7

POWER (dB)

xdB

FEC
RATE
7/8

$f_0$          $f_0+\Delta$          $f_0+2\Delta$

FREQUENCY ON TRANSPONDER

## Fig. 8

| 51 | 52 | 53 | 54 | 55 | | | |
|---|---|---|---|---|---|---|---|
| U W | OHD | DATA FOR CH1 | DATA FOR CH2 | DATA FOR CHM | U W | OHD | DATA FOR CH1 |

ONE FRAME OF SATELLITE DATA

EP 0 327 101 A2